# FASCICULE DE BREVET EUROPEEN

(11) **EP 4 003 809 B1**
(45) Date de publication et mention de la délivrance du brevet: **10.04.2024**
(21) Numéro de dépôt: 20743699.9
(22) Date de dépôt: 23.07.2020
(51) Int. Cl.: B61H 5/00, B61H 13/34, F16D 65/095

(54) **SYSTEME DE FREINAGE FERROVIAIRE COMPORTANT UNE TIMONERIE DE FREINAGE ET VEHICULE FERROVIAIRE POURVU D'UN TEL SYSTEME**
SCHIENENBREMSSYSTEM MIT BREMSGESTÄNGE UND SCHIENENFAHRZEUG MIT EINEM SOLCHEN SYSTEM
RAILWAY BRAKING SYSTEM COMPRISING BRAKE RIGGING, AND RAIL VEHICLE EQUIPPED WITH SUCH A SYSTEM

(30) Priorité: 26.07.2019 FR 1908510; 26.07.2019 FR 1908512; 18.10.2019 FR 1911666
(43) Date de publication de la demande: 01.06.2022
(73) Titulaire: Faiveley Transport Amiens, 80000 Amiens (FR)
(72) Inventeur: GONCALVES, Claudino, 80620 RIBEAUCOURT (FR); GERBER-PAPIN, Denis, 80830 L'ETOILE (FR)
(74) Mandataire: Santarelli
(86) Numéro de dépôt international: PCT/EP2020/070889
(87) Numéro de publication internationale: WO 2021/018745

(56) Documents cités:
- DE-A1-102017 101 028

## Description

### Domaine technique de l'invention

L'invention concerne le domaine du freinage des véhicules ferroviaires. Elle concerne plus particulièrement un système de freinage pour véhicule ferroviaire à freins à au moins une garniture, pourvu d'une timonerie de freinage et d'un frein de service et/ou de parking configuré pour agir sur des organes de freinage du véhicule, tel que par exemple des disques de frein, par l'intermédiaire de la timonerie de freinage.

### Etat de la technique

Les véhicules ferroviaires dits à freins à au moins une garniture sont généralement équipés de systèmes de freinage à cylindres de frein de service et/ou de parking, comportant un piston mobile sous l'effet d'un fluide sous pression, le déplacement de ce piston actionnant une timonerie de freinage et entraînant une action de freinage telle que le serrage d'un disque de frein par la garniture de cette timonerie.

Un tel système de freinage est monté sur le véhicule ferroviaire, pour être en contact avec les disques de frein ou bien les roues. En particulier, il peut être assujetti mécaniquement sur un bogie, ou bien sur un essieu fixé au bogie, ou encore sur un autre dispositif du type moteur d'entraînement ou boîte de vitesses montés aussi sur le bogie.

L'action de freinage engendre des efforts de freinage qui peuvent être transmis, via la timonerie de freinage, au support auquel est assujetti le système de freinage. Ces efforts peuvent générer des déformations, ou à tout le moins des déplacements, de la timonerie de freinage par rapport au disque de frein du véhicule, entraînant ainsi une usure irrégulière de la garniture.

DE 10 2017 101 028 divulgue un tel système de freinage.

### Exposé de l'invention

L'invention concerne un système de freinage pour véhicule ferroviaire à freins au moins une garniture, comportant une timonerie de freinage améliorée, tout en étant simple, commode et économique.

L'invention a ainsi pour objet, sous un premier aspect, un système de freinage ferroviaire pour véhicule, comportant une timonerie de freinage et un frein de service et/ou de parking configuré pour agir sur au moins un organe de freinage dudit véhicule ferroviaire par l'intermédiaire de ladite timonerie de freinage, laquelle est pourvue d'au moins un dispositif ayant au moins un support garnitures et au moins une garniture assujettie mécaniquement sur ledit au moins un support garnitures, et d'au moins un levier s'étendant depuis ledit frein de service et/ou de parking jusqu'audit dispositif, caractérisé en ce que ledit au moins un levier est assujetti mécaniquement audit au moins un support garnitures, sur une zone d'attache de ce dernier qui est opposée à ladite au moins une garniture et qui se trouve au plus à 35 mm d'un axe central transversal dudit dispositif.

En d'autres termes, les forces appliquées par le levier de la timonerie de freinage sur le dispositif de cette timonerie pour le mettre au contact de l'organe de freinage du véhicule, notamment un disque de frein, sont sensiblement centrées sur le support garnitures.

Puisque la zone d'attache du levier sur le support garnitures est proche de l'axe central transversal du dispositif, cela permet au support garnitures de disposer d'un degré de liberté lorsqu'il transmet des efforts sur le disque de frein du véhicule.

En particulier, le support garnitures peut s'auto-incliner pour s'adapter au type de système de freinage et/ou aux conditions d'utilisation du véhicule ferroviaire.

Par exemple, l'agencement de la timonerie de freinage dont la forme l'agencement et/ou les matériaux du support garnitures et/ou des garnitures, et/ou le fait qu'il s'agisse d'un frein de parking ou bien d'un frein de service, et/ou le type de véhicule (tram, métro, train grande vitesse, etc.), et/ou la charge du véhicule, et/ou le trajet effectué par le véhicule, et/ou le type d'organe de freinage (diamètre, épaisseur, matière du disque), peuvent être des paramètres qui font que le support garnitures peut se placer de manière optimale.

Des caractéristiques préférées, simples, commodes et économiques du système selon l'invention sont présentées ci-après.

Ladite zone d'attache peut se trouver entre environ 0 et 35 mm dudit axe central transversal dudit dispositif.

Ladite zone d'attache peut s'étendre selon une orientation générale longitudinale dudit dispositif et sur une longueur comprise entre environ 15 mm et environ 70 mm.

Ladite zone d'attache peut s'étendre de part et d'autre dudit axe central transversal dudit dispositif de manière ininterrompue.

Ladite au moins une zone d'attache peut s'étendre de part et d'autre dudit axe central transversal dudit dispositif de manière interrompue.

Le système peut comporter au moins une biellette de transmission d'efforts assujettie mécaniquement à une première extrémité à un support du véhicule et à une seconde extrémité opposée à ladite première extrémité audit au moins un support garnitures, à proximité immédiate de ladite zone d'attache dudit au moins un levier.

Ladite au moins une biellette de transmission d'efforts peut présenter une forme sensiblement en L, ou en S.

Ladite au moins une biellette de transmission d'efforts peut s'étendre sensiblement dans un même plan que celui dans lequel s'étend ledit au moins un levier.

Ladite au moins une biellette de transmission d'efforts peut être assujettie mécaniquement par des liaisons pivots respectivement audit support du véhicule et audit au moins un support garnitures.

Ladite au moins une biellette de transmission d'efforts peut présenter un jeu ajouté fonctionnel au niveau de sa seconde extrémité où elle est liée audit au moins un support garnitures.

Ladite au moins une biellette de transmission d'efforts peut être liée via une rotule audit au moins un support garnitures.

Ladite au moins une biellette de transmission d'efforts peut être liée audit au moins un support garnitures via un axe pivotant dans un orifice de diamètre bien plus grand que celui dudit axe pivotant, ou dans un orifice oblong.

Ledit dispositif peut comporter au moins deux zones d'appui sur ledit au moins un organe de freinage et au moins une zone de retrait située entre les deux dites zones d'appui.

De telles zones d'appui et de retrait sont configurées pour répartir la transmission des efforts sur l'organe de freinage. Ces zones n'ont rien à voir avec d'éventuelles zones de fixation des garnitures sur le support de garniture, ces dernières n'étant pas configurées pour répartir la transmission des efforts sur l'organe de freinage.

Ledit au moins un support garnitures et/ou ladite au moins une garniture peuvent présenter une orientation générale longitudinale et une orientation générale transversale, avec lesdites zones d'appui et de retrait qui se succèdent selon ladite orientation générale longitudinale.

Le système peut comporter au moins deux garnitures assujetties mécaniquement sur un dit support garnitures, avec au moins une dite zone d'appui qui se trouve en regard d'une dite garniture respective.

Lesdites au moins deux zones d'appui et ladite au moins une zone de retrait peuvent être ménagées sur ledit au moins un support garnitures.

Lesdites au moins deux zones d'appui et ladite au moins une zone de retrait peuvent être ménagées sur ladite au moins une garniture.

Ledit dispositif peut comporter une pluralité de dites zones d'appui entre lesquelles sont formées des dites zones de retrait.

Ledit au moins un support garnitures et/ou ladite au moins une garniture peuvent présenter une orientation générale longitudinale et une orientation générale transversale, avec lesdites zones d'appui et de retrait qui se succèdent selon ladite orientation générale longitudinale.

Au moins une dite zone d'appui et/ou de retrait peut s'étendre totalement ou seulement partiellement le long de ladite orientation générale transversale.

Lesdites zones d'appui et de retrait sont ménagées sensiblement symétriquement par rapport à un axe central transversal dudit dispositif. Cet axe peut correspondre par exemple à un axe médian dudit organe de freinage dudit véhicule ferroviaire.

L'invention a aussi pour objet, sous un deuxième aspect, un véhicule ferroviaire comportant au moins un organe de freinage, notamment un disque de frein, et au moins un système de freinage ferroviaire tel que décrit ci-dessus, qui est configuré pour agir sur ledit au moins un organe de freinage.

### Brève description des figures

On va maintenant poursuivre l'exposé de l'invention par la description d'exemples de réalisation, donnée ci-après à titre illustratif et non limitatif, en référence aux dessins annexés.
La figure 1 illustre schématiquement et partiellement un système de freinage ferroviaire pourvu notamment d'un frein de service, d'un frein de parking et d'une unité de contrôle et de commande.
La figure 2 représente partiellement et schématiquement le système illustré sur la figure 1, assujetti mécaniquement à un essieu d'un bogie d'un véhicule ferroviaire comportant un tel système de freinage ferroviaire.
La figure 3 représente schématiquement un support garnitures selon un premier mode de réalisation du système de freinage ferroviaire de la figure 1, lequel support garnitures est monté en regard d'une première face d'un disque de frein aussi illustré sur la figure 1.
La figure 4 est une vue en coupe représentée IV-IV sur la figure 3.
La figure 5 représente schématiquement une face de contact du support garnitures illustré sur la figure 3.
La figure 6 illustre schématiquement des garnitures en regard de la première face du disque de frein, lesquelles garnitures sont prévues pour être portées par le support garnitures.
La figure 7 est une vue similaire à celle de la figure 4, montrant une première variante de réalisation du support garnitures.
La figure 8 est une vue similaire à celle de la figure 5, montrant la première variante de réalisation du support garnitures.
La figure 9 est une vue similaire à celle de la figure 6, les garnitures étant montées sur la première variante de réalisation du support garnitures.
La figure 10 est une vue similaire à celle de la figure 3, montrant un support garnitures selon un deuxième mode de réalisation du système de freinage ferroviaire de la figure 1.
La figure 11 est une vue en coupe représentée XI-XI sur la figure 10.
La figure 12 représente schématiquement une face de contact du support garnitures illustré sur la figure 10.
La figure 13 est une vue similaire à celle de la figure 6.
La figure 14 est une vue similaire à celle de la figure 11, montrant une première variante de réalisation du support garnitures selon le deuxième mode de réalisation du système.
La figure 15 est une vue similaire à celle de la figure 12, montrant la première variante de réalisation du support garnitures selon le deuxième mode de réalisation du système.
La figure 16 est une vue similaire à celle de la figure 10, montrant une biellette de transmission d'efforts assujettie mécaniquement sur le support garnitures.
La figure 17 est une vue similaire à celle de la figure 14, avec en plus la biellette de transmission d'efforts.
La figure 18 est une vue similaire à celle de la figure 11, avec en plus la biellette de transmission d'efforts.
La figure 19 est une vue similaire à celle de la figure 4, montrant un support garnitures selon un troisième mode de réalisation du système de freinage ferroviaire, avec la biellette de transmission d'efforts.
La figure 20 montre une interconnexion mécanique entre un support garnitures et une biellette de transmission d'efforts, dans une première position de cette dernière.
La figure 21 est une vue similaire à celle de la figure 21, la biellette de transmission d'efforts qui se trouve dans une deuxième position.
La figure 22 illustre une variante de réalisation de la biellette de transmission d'efforts.

### Description détaillée

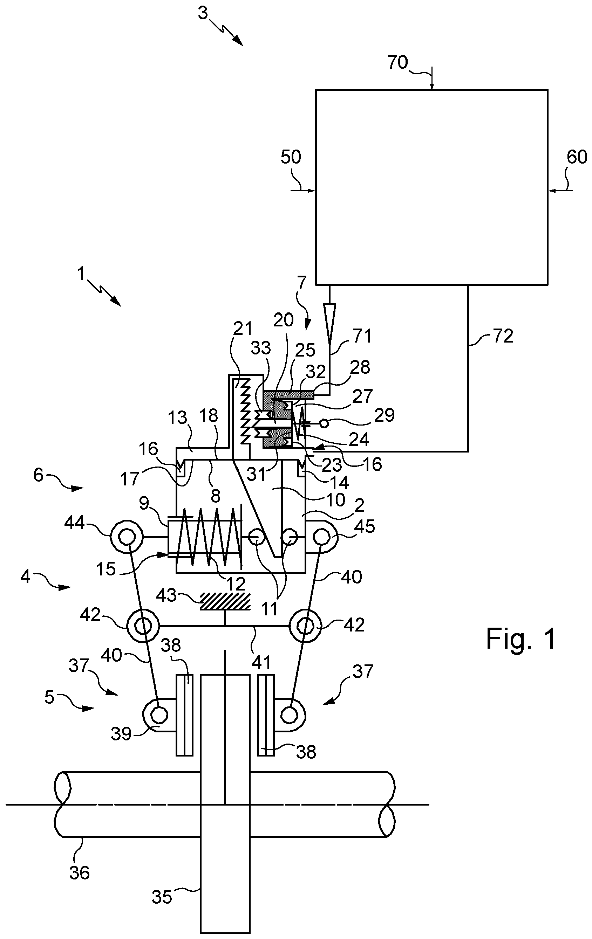

La figure 1 représente schématiquement un système de freinage ferroviaire 1 pour un véhicule ferroviaire à frein à garnitures.

Il s'agit d'un système de freinage ferroviaire structurellement du type de celui décrit dans la demande de brevet européen EP 2 826 684.

Le système de freinage ferroviaire 1 comporte un corps 2 formant ici un cylindre à la fois de frein de service 6 et de frein de parking 7, une unité de contrôle et de commande 3 configurée pour gérer le fonctionnement du frein de service 6 et du frein de parking 7, un réseau de cheminement de conduites pneumatiques connecté au corps 2 et à l'unité de contrôle et de commande 3, et une timonerie de freinage 4 reliée mécaniquement au corps 2.

Le corps 2 présente ici la forme d'une enveloppe globalement fermée.

Le frein de service 6 comporte un piston de frein de service 8 mobile par rapport au corps 2 selon une première direction axiale, une tige de poussée 9 mobile également par rapport au corps 2 suivant une deuxième direction axiale perpendiculaire à la première direction axiale.

Le piston de freinage 8 délimite avec le corps 2 une chambre de pression de frein de service 13.

Le piston de freinage 8 présente deux côtés, respectivement un premier côté 17 configuré pour agir sur la timonerie de freinage 4 par l'intermédiaire de la tige de poussée 9, et un second côté 18 opposé au premier côté 17 et tourné vers la chambre de pression de frein de service 13.

Le frein de service 6 comporte en outre une tige crantée 21 fixée sur le deuxième côté 18 du piston de freinage 8. Cette tige crantée 21 s'étend longitudinalement selon la première direction axiale.

Le piston de freinage 8 est configuré pour se déplacer dans le corps 2 tout en maintenant la chambre de pression de frein de service 13 relativement étanche grâce à une membrane 14, par exemple formée par un joint d'étanchéité, disposée entre ce piston de freinage 8 et des bords intérieurs du corps 2.

Le frein de service 6 peut comporter une pièce de coin 10 fixée sur le premier côté 17 du piston de freinage 8.

Cette pièce de coin 10 peut présenter une section triangulaire et être configurée pour coopérer avec un jeu de butées à roulements 11, dont l'une des butées à roulements peut être reliée au corps 2 tandis que l'autre des butées à roulements peut être reliée à la tige de poussée 9.

Cette tige de poussé 9 peut être pourvue d'un régleur d'usure configuré pour compenser l'usure des garnitures du frein 5 afin d'éviter qu'un jeu trop important (consécutif à l'usure des garnitures) ne réduise l'effort de freinage.

Le frein de service 6 peut comporter un ressort 12 disposé autour de la tige de poussée 9, entre la butée à roulements qui est reliée à cette dernière et un bord intérieur du corps 2. Ce ressort 12 est configuré pour rappeler la butée qui est reliée à la tige de poussée 9 contre la pièce de coin 10.

Le frein de service 6 peut comporter un premier orifice 15 ménagé dans le corps 2 et configuré pour autoriser le déplacement de la tige de poussée 9 au travers de ce premier orifice 15.

Le frein de service 6 peut comporter un deuxième orifice 16 ménagé dans le corps 2 et débouchant dans la chambre de pression de frein de service 13.

La chambre de pression de frein de service 13 est ici raccordée par une première conduite d'alimentation 72 du réseau de cheminement de conduites pneumatiques, appelée plus généralement conduite de frein, laquelle conduite est connectée au niveau de ce deuxième orifice 16 à une source d'alimentation en agents de pression pneumatiques (non visible).

Le corps 2 comporte une cavité 27 accolée à la chambre de pression de frein de service 13 et dans laquelle est disposé le frein de parking 7.

Le frein de parking 7 comporte un dispositif de blocage formé par un doigt de blocage 20 mobile par rapport au corps 2 et s'étendant suivant la deuxième direction axiale.

Le frein de parking 7 comporte un piston de maintien 23 mobile par rapport au corps 2 et délimite avec ce dernier une chambre de pression de frein de parking 25.

Ce piston de maintien 23 présente deux côtés, respectivement un premier côté 31 sur lequel est attaché le doigt de blocage 20 et qui est tourné vers la chambre de pression de frein de parking 25, ainsi qu'un second côté 32 opposé au premier côté.

Le frein de parking 7 comporte un élément ressort 24 disposé entre le corps 2 et le deuxième côté 32 du piston de maintien 23. Cet élément ressort 24 est configuré pour agir sur ce piston de maintien 23 et par conséquent sur le doigt de blocage 20.

Le piston de maintien 23 et l'élément ressort 24 peuvent former un dispositif de commande mobile du frein de parking 7.

Le piston de maintien 23 est configuré pour se déplacer dans le corps 2 tout en maintenant la chambre de pression de frein de parking 25 relativement étanche grâce à une membrane disposée entre ce piston de maintien 23 et des bords intérieurs du corps 2.

Le frein de parking 7 comporte un troisième orifice (non représenté) ménagé dans le corps 2 et débouchant à la fois dans la chambre de pression de frein de parking 25 et dans la chambre de pression de frein de service 13, lequel troisième orifice est configuré pour autoriser le déplacement du doigt de blocage 20 à travers ce troisième orifice.

L'étanchéité relative entre la chambre de pression de frein de parking 25 et la chambre de pression de frein de service 13 est assurée par la présence d'un joint d'étanchéité 33 disposé à l'interface entre ce troisième orifice et le doigt de blocage 20.

Le frein de parking 7 comporte un quatrième orifice 28 ménagé dans le corps 2 et débouchant dans la chambre de pression de frein de parking 25.

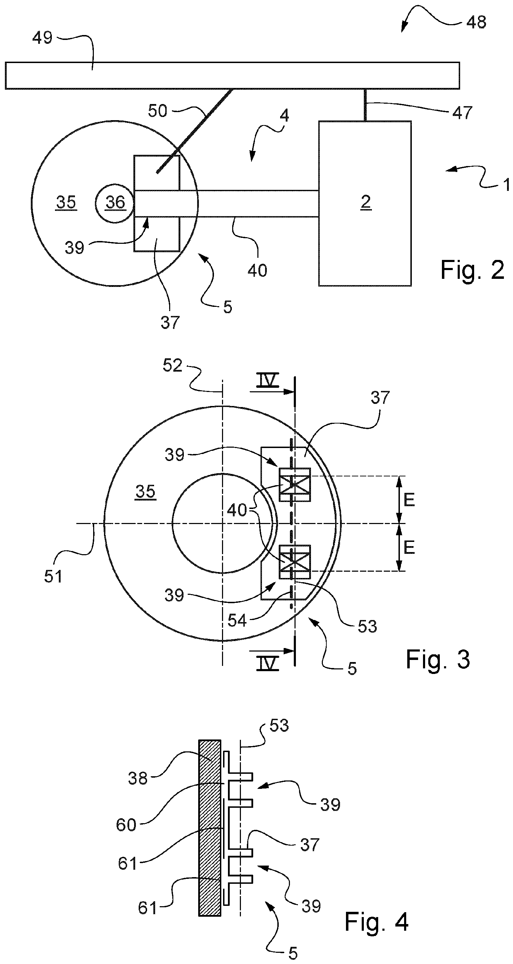

La chambre de pression de frein de parking 25 peut être raccordée par une deuxième conduite d'alimentation 71 du réseau de cheminement de conduites pneumatiques, appelée aussi conduite de frein de parking, connectée au niveau de ce quatrième orifice 28, à la source d'alimentation en agents de pression pneumatiques 73 (visible figure 2) via l'unité 3.

Le frein de parking 7 comporte une pièce de déverrouillage 29 pour désactiver le frein de parking 7.

La pièce de déverrouillage 29 peut par exemple être rattachée sur le deuxième côté 32 du piston de maintien 23 et déboucher à l'extérieur du corps 2 au travers d'un cinquième orifice (non représenté) ménagé dans ce corps 2 et débouchant dans la cavité 27.

La pièce de déverrouillage 29 est accessible pour être manipulée depuis l'extérieur du corps 2 le cas échéant.

La pièce de déverrouillage 29 peut être connectée à un dispositif indicateur prévu pour indiquer un état du frein de parking 7 et/ou un état du frein de service 6.

En particulier, la pièce de déverrouillage 29 peut être couplée à un commutateur assujetti mécaniquement à cette pièce 29 et présentant une première position et une deuxième position sélectionnée en fonction de la position de la pièce de déverrouillage 29.

Le frein de service 6 est disposé dans le corps 2 et est configuré pour agir sur un ou plusieurs organes de freinage 35 du véhicule ferroviaire par l'intermédiaire de la timonerie de freinage 4.

L'organe de freinage 35 du véhicule peut comporter un disque de frein (ici vu de dessus) monté par exemple sur un essieu 36 du véhicule ferroviaire, ou directement sur la roue à freiner.

La timonerie de freinage 4 est pourvue d'un dispositif 5 à garnitures prévu pour appliquer des efforts sur le disque de frein 35 lorsque la timonerie 4ets actionnée.

Ce dispositif 5 comporte ici deux supports garnitures 37 sur chacun desquels sont assujetties mécaniquement des garnitures 38.

En particulier, deux garnitures 38 peuvent être montées sur chaque support garnitures 37.

Chaque garniture 38 est prévue pour être appliquée au contact du disque 35 pour réduire sa vitesse de rotation et par conséquent celle de la roue à freiner.

La timonerie de freinage 4 comporte ici des leviers 40, par exemple sensiblement déformables.

Dans l'exemple décrit, chaque levier 40 est pourvu d'une portion supérieure et d'une portion inférieure qui sont solidaire et qui s'étendent depuis le frein de service et de parking jusqu'au dispositif 5.

Chaque portion des leviers 40 peut être articulée sur un connecteur central 41 par l'intermédiaire de deux pivots 42.

La portion supérieure de chaque levier 40 peut être reliée par une première extrémité à une articulation respective 44, 45.

La timonerie de freinage 4 peut recevoir le corps 2 entre les portions supérieures des leviers déformables 40, au niveau des articulations 44 et 45.

Le corps 2 peut être monté à rotation sur l'articulation 44 qui est solidaire d'une extrémité de la tige de poussée 9 tandis qu'il peut être monté fixe sur l'articulation 45, laquelle est directement solidaire de ce corps 2.

La portion inférieure de chaque levier 40 peut être reliée, à une deuxième extrémité opposée à sa première extrémité, à l'un des supports garnitures 37 au niveau d'une zone d'attache 39 ménagée sur ce dernier et qui est opposée aux garnitures 37.

La timonerie de freinage 4 peut comporter un premier organe de fixation 43 solidaire du connecteur central 41 pour le montage de cette timonerie de freinage 4 sur le véhicule ferroviaire ; afin que les supports garnitures 37 soient situés de part et d'autre du disque de frein 35 (ou de la roue du véhicule ferroviaire).

Le rapprochement des articulations 44 et 45 peut permettre d'écarter les supports garnitures 37 l'un de l'autre et qu'à l'inverse, l'éloignement de ces articulations 44 et 45 peut permettre de serrer les supports garnitures 37 sur le disque de frein 35 (ou sur la roue du véhicule ferroviaire).

L'unité de contrôle et de commande 3 est connectée à la chambre de pression de frein de service 13 par l'intermédiaire de la première conduite d'alimentation 72 à laquelle elle est raccordée.

Cette unité 3 est connectée à la chambre de pression de frein de parking 25 par l'intermédiaire de la seconde conduite d'alimentation 71 à laquelle elle est raccordée.

Cette unité 3 est alimentée en agents pneumatiques par une conduite principale 70 qui chemine généralement le long du véhicule ferroviaire.

L'unité 3 comporte des éléments systémiques (non représentés sur la figure 1) qui sont configurés pour recevoir et traiter des informations représentatives relatives par exemple à des consignes de fonctionnement du véhicule ferroviaire, par un premier canal du type électrique et/ou pneumatique et/ou encore manuel, noté 50 sur la figure 1.

Ces éléments systémiques sont en outre configurés pour recevoir et traiter des informations représentatives relatives à des paramètres d'utilisation du véhicule ferroviaire, par un second canal du type électrique et/ou pneumatique et/ou encore manuel, noté 60 sur la figure 1.

Ces éléments systémiques peuvent par exemple être formés par des relais pneumatiques et/ou des électrovannes et/ou des manostats et/ou des capteurs et/ou des détendeurs et/ou des relais électriques et/ou des cartes électroniques et/ou des unités centrales de traitement ou microprocesseurs, et/ou des composants de mémoire vive comportant des registres adaptés à enregistrer des variables des paramètres créés et modifiés au cours de l'exécution de programmes, et/ou des interfaces de communication configurées pour transmettre et recevoir des données, et/ou des éléments de stockage interne, tels que des disques durs, pouvant notamment comporter le code exécutable de programmes permettant la gestion des freins de service et parking 6 et 7.

L'unité de contrôle et de commande 3 peut être associée à une ou plusieurs timoneries de freinage du véhicule ferroviaire.

La figure 2 montre très schématiquement le véhicule ferroviaire 48 pourvu d'un essieu formant un support 49 auquel est assujetti mécaniquement le système 1, par l'intermédiaire par exemple d'un second organe de fixation 47 qui relie le corps 2 au support 49.

Le système 1 peut comporter au moins une biellette de transmission d'efforts 50 assujettie aussi mécaniquement à une première extrémité au support 49 du véhicule 48 et à une seconde extrémité opposée à la première extrémité au support garnitures 37, à proximité immédiate de la zone d'attache 39 du levier 40.

Le support garnitures 37 est ici en regard d'une face du disque 35 monté sur son axe d'essieu 36 du véhicule 48.

On va maintenant décrire plus en détail, en référence aux figures 3 à 16, le dispositif 5 et l'agencement des leviers 40 vis-à-vis du dispositif 5, conformément à plusieurs modes de réalisation.

Les figures 3 à 6 illustrent une première version d'un premier mode de réalisation.

Le dispositif 5 est en regard du disque de frein 35.

Le dispositif 5, dont le support garnitures 37 et les garniture 38, présentent une orientation générale longitudinale et une orientation générale transversale.

Un axe central longitudinal 52 et un axe central transversal 51 sont illustrés.

Ils correspondent respectivement aux axes médians du disque de frein 35 et l'axe central transversal 51 correspond en outre, sur la position illustrée sur la figure 3, à un axe central transversal du dispositif 5.

Le levier 40 est assujetti mécaniquement au support garnitures 37 via les zones d'attache 39.

Les zones d'attache 39 se trouvent au plus à environ 35 mm de l'axe central transversal 51 du dispositif 5. Ceci signifie que les distances E représentées sur la figure 3 sont chacune au plus égale à 35 mm.

Ici, les zones d'attache 39 se trouvent de part et d'autre de l'axe central transversal 51 et s'étendent donc au maximum, selon l'orientation générale longitudinale, sur environ 70 mm.

Plus généralement, la ou les zones d'attache 39 peuvent se trouver entre environ 0 et environ 35 mm de l'axe central transversal 51 et elles peuvent peut s'étendre selon une orientation générale longitudinale et sur une longueur comprise entre environ 15 mm et environ 70 mm.

Dans l'exemple décrit, les zones d'attache 39 s'étendent de part et d'autre de l'axe central transversal 51 de manière interrompue.

Autrement dit, les zones d'attache 39 sont distinctes.

En variante, les zone d'attache peuvent s'étendre de part et d'autre de l'axe central transversal 51 de manière ininterrompue.

Un axe longitudinal d'application des efforts 53 est illustré en traits pointillés fins, tandis qu'un axe longitudinal de maintien 54 est illustré en traits pointillés épais.

L'axe longitudinal d'application des efforts 53 est celui passant par les zones d'attaches 39 du support garnitures 37, lesquelles permettent l'assujettissement mécanique des leviers 40, tandis que l'axe longitudinal de maintien 54 est légèrement décalé par rapport à l'axe longitudinal d'application des efforts 53 et correspond à la zone de fixation des garnitures 38 sur le support garnitures 37.

Les forces appliquées par le levier 40 de la timonerie de freinage 4 sur le dispositif 5 de cette timonerie 4 pour le mettre au contact du disque de frein 35 sont sensiblement ainsi centrées sur le support garnitures 37.

Puisque les zones d'attache 39 du levier 40 sur le support garnitures 37 sont proches de l'axe central transversal 51, cela permet au support garnitures 37 de disposer d'un degré de liberté lorsqu'il transmet les efforts sur le disque de frein 35.

Dans l'exemple décrit, le dispositif 5 comporte au moins deux zones d'appui 60 sur le disque de frein 35 et au moins une zone de retrait 61 située entre les deux zones d'appui 60.

Plus généralement, le dispositif peut comporter une pluralité de zones d'appui entre lesquelles sont formées des zones de retrait.

Les zones d'appui 60 et de retrait 61 se succèdent selon l'orientation générale longitudinale du dispositif 5.

Les deux zones d'appui 60 et la zone de retrait 61 sont ici ménagées sur une face du support garnitures 37, opposée à celle sur laquelle sont formées les zones d'attache 39.

Chacune des deux zones d'appui 60 est ici ménagée de sorte à se trouver en regard d'une garniture 38 respective.

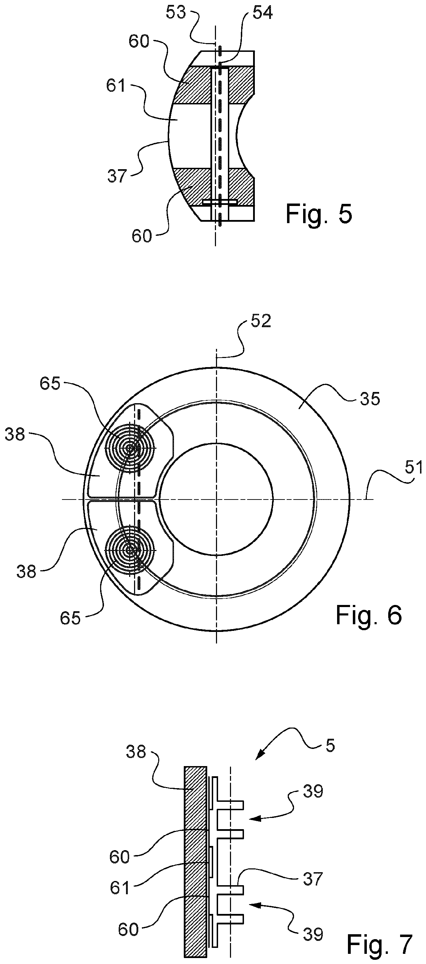

Ceci est représenté sur les figures 6 et 7 où l'on voit d'une part les zones d'appuis 60 ménagées sur le support garnitures 37 et d'autre part des zones de contact privilégiées 65 ménagées sur les garnitures 38, qui correspondent respectivement aux zones d'appuis 60.

On notera que les zones d'appuis peuvent être formées par des protubérances sur les supports garnitures et/ou que les zone de retrait peuvent être formées par des renfoncements dans les supports garnitures. Les zones d'appuis et les zones de retrait se trouvent ainsi dans des plans décalés.

Dans l'exemple décrit, les zones d'appui 60 et la zone de retrait 61 s'étendent totalement le long de l'orientation générale transversale du dispositif 5.

Au surplus, les zones d'appui 60 et la zone de retrait 61 sont ici ménagées sensiblement symétriquement par rapport à l'axe central transversal 51.

Le dispositif 5 de la timonerie de freinage 4 qui vient au contact du disque de frein 35 est donc pourvue d'une surface d'appui dite discontinue, avec seulement les zones d'appui 60 qui permettent de transmettre des efforts sur le disque de frein 35. Ceci permet de répartir la transmission des efforts sur le disque de frein 35.

Les figures 7 à 9 illustrent une deuxième version.

La différence avec la précédente version est que les zones d'appui 60 sont plus rapprochées l'une de l'autre et de l'axe central transversal 51, et la zone de retrait 61 qui est plus restreinte.

Il en ressort que les zones de contact privilégiées 65 ménagées sur les garnitures 38 et qui correspondent respectivement aux zones d'appuis 60 sont aussi plus rapprochées l'une de l'autre et de l'axe central transversal 51.

Les zones d'attache 39 sont identiques à celles décrites plus haut.

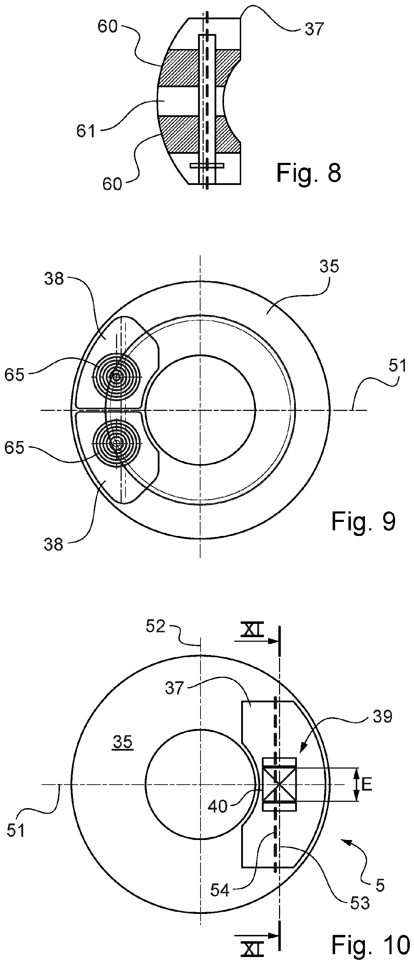

Les figures 10 à 13 illustrent une première version d'un deuxième mode de réalisation.

Le dispositif 5 diffère de ceux décrits plus haut en ce que le levier 40 est assujetti mécaniquement au support garnitures 37 via une unique zone d'attache 39.

La zone d'attache 39 se trouve au niveau de l'axe central transversal 51 du dispositif 5 et s'étend légèrement de part et d'autre de cet axe 51.

Par exemple, la zone d'attache s'étend seulement d'environ 10 mm à environ 20 mm de part et d'autre de l'axe central transversal 51.

Ceci signifie que la distance E représentée sur la figure 10 est au plus égale à environ 40 mm, selon l'orientation générale longitudinale.

Plus généralement, une telle zone unique d'attache peut s'étendre selon l'orientation générale longitudinale et sur une longueur comprise entre environ 15 mm et environ 70 mm.

La zone d'attache unique 39 s'étend ici de part et d'autre de l'axe central transversal 51 de manière ininterrompue.

Les forces appliquées par le levier 40 de la timonerie de freinage 4 sur le dispositif 5 de cette timonerie 4 pour le mettre au contact du disque de frein 35 sont sensiblement ainsi centrées sur le support garnitures 37.

Puisque la zone d'attache 39 du levier 40 sur le support garnitures 37 est au niveau de l'axe central transversal 51, cela permet au support garnitures 37 de disposer d'un degré de liberté lorsqu'il transmet les efforts sur le disque de frein 35.

Dans l'exemple décrit, le dispositif 5 comporte au moins deux zones d'appui 60 sur le disque de frein 35 et au moins une zone de retrait 61 située entre les deux zones d'appui 60.

Les zones d'appui 60 et de retrait 61 se succèdent selon l'orientation générale longitudinale du dispositif 5 et sont identiques à celle du dispositif illustré sur les figures 3 à 6.

Les deux zones d'appui 60 et la zone de retrait 61 sont ici ménagées sur une face du support garnitures 37, opposée à celle sur laquelle sont formées les zones d'attache 39, et chacune des deux zones d'appui 60 est ici ménagée de sorte à se trouver en regard d'une garniture 38 respective.

Des zones de contact privilégiées 65 sont ainsi ménagées sur les garnitures 38, qui correspondent respectivement aux zones d'appuis 60.

Les zones d'appui 60 et la zone de retrait 61 s'étendent totalement le long de l'orientation générale transversale du dispositif 5, et sont ici ménagées sensiblement symétriquement par rapport à l'axe central transversal 51.

Le dispositif 5 de la timonerie de freinage 4 qui vient au contact du disque de frein 35 est donc pourvue d'une surface d'appui dite discontinue, avec seulement les zones d'appui 60 qui permettent de transmettre des efforts sur le disque de frein 35. Ceci permet de répartir la transmission des efforts sur le disque de frein 35.

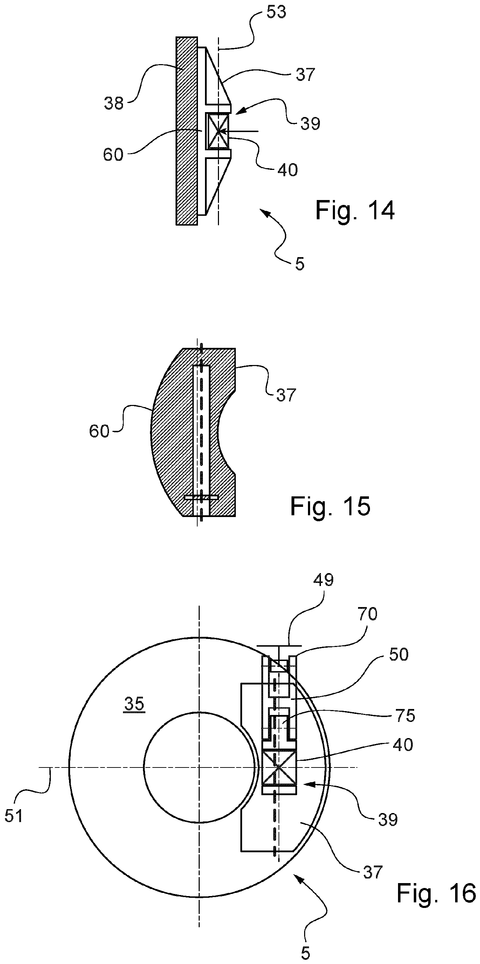

Les figures 14 et 15 illustrent une deuxième version du deuxième mode de réalisation.

La différence avec la précédente version est que le dispositif 5 est dépourvu de zone de retrait et ne présente donc qu'une unique zone d'appui 60 qui s'étend sur tout la face du support garnitures 37.

La figure 16 est une vue similaire à celle de la figure 10, avec en plus la biellette de transmission d'efforts 50 visible très schématiquement sur la figure 2.

La biellette de transmission d'efforts 50 est assujettie mécaniquement à une première extrémité au support 49 du véhicule et à une seconde extrémité opposée à sa première extrémité au support garnitures 37, et à proximité immédiate de la zone d'attache unique 39 du levier 40 sur ce même support garnitures 37.

La biellette de transmission d'efforts 50 peut être assujettie mécaniquement par des liaisons pivots 70, 75 respectivement au support 49 du véhicule et au support garnitures 37.

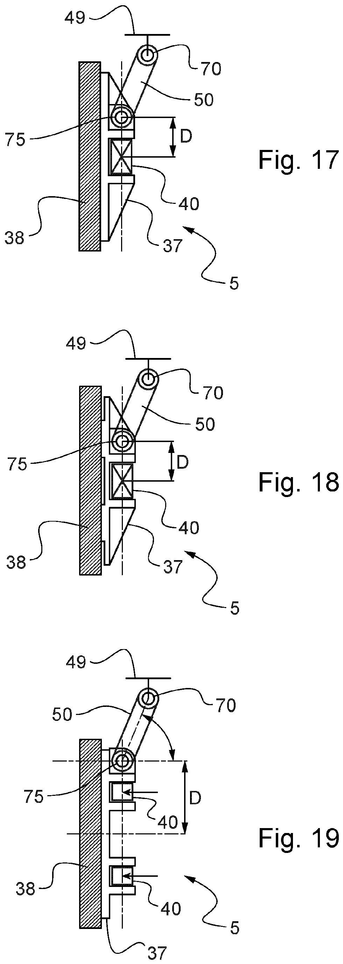

Puisque la ou les zones d'attache 39 du levier 40 sur le support garnitures 37 sont rapprochées et/ou centrées sur l'axe central transversal 51 du dispositif 5, la liaison pivot 75 qui relie la biellette de transmission d'efforts 50 au support garnitures 37 se trouve elle aussi rapprochée de ce même axe central transversal 51, limitant ainsi la distance D représentée sur les figures 17 à 19.

Ceci permet notamment de disposer d'un système 1 particulièrement compact.

La figure 17 montre la biellette de transmission d'efforts 50 assujettie sur un support garnitures 37 d'un dispositif 5 similaire à celui décrit en référence à la figure 14, sans zone de retrait sur le support garnitures 37, et avec une zone d'attache unique 39 du levier 40 sur le support garnitures 37.

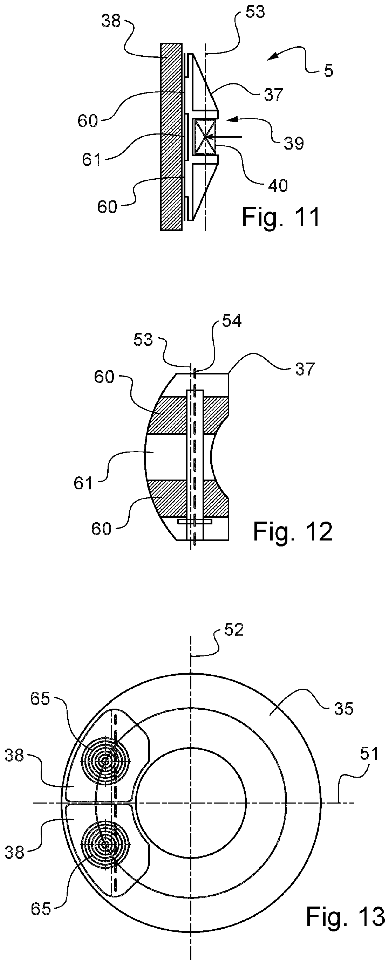

La figure 18 montre la même biellette de transmission d'efforts 50 assujettie sur un support garnitures 37 d'un dispositif 5 similaire à celui décrit en référence à la figure 11, avec des zones d'appui 60 et une zone de retrait 61 ménagées sur le support garnitures 37, et avec une zone d'attache unique 39 du levier 40 sur le support garnitures 37.

La figure 19 montre la même biellette de transmission d'efforts 50 assujettie sur un support garnitures 37 d'un dispositif 5 assez proche de ceux décrits en référence aux figures 4 et 7, mais dépourvu de zone de retrait sur le support garnitures 37 (à la manière de ceux décrits en référence aux figures 14 et 17), tandis qu'il comporte des zones d'attaches 39 distinctes du levier 40 sur le support garnitures 37.

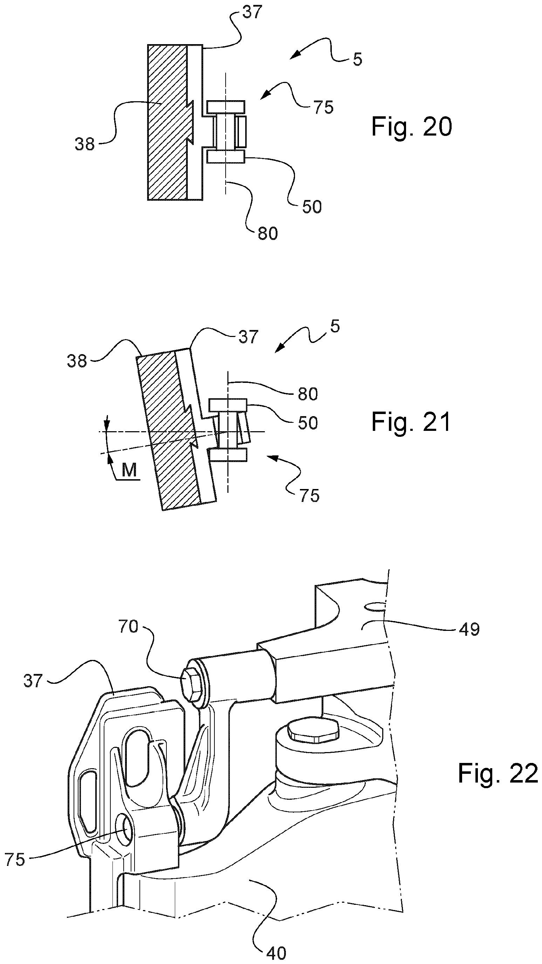

Comme illustré sur les figures 20 et 21, la biellette de transmission d'efforts 50 peut présenter un jeu ajouté fonctionnel au moins au niveau de sa seconde extrémité où elle est liée au support garnitures 37 par sa liaison pivot 75.

En particulier, la biellette de transmission d'efforts 50 peut être liée via une rotule au support garnitures 70 ou bien via un axe pivotant dans un orifice de diamètre bien plus grand que celui de l'axe pivotant, ou encore dans un orifice oblong.

Ceci est représenté schématiquement avec un axe 80 de la biellette de transmission d'efforts 50 qui, au niveau de la liaison pivot 75, peut être décaler angulairement, d'un angle noté M, permettant ainsi au dispositif 5, dont le support garnitures 37 et les garnitures 38, de s'auto-incliner pour conserver une application optimale de l'effort de freinage tout en permettant de renvoyer les efforts vers le support du véhicule.

Ceci permet en outre de limiter l'usure en biais des garnitures 38, malgré les déformations que peut par exemple subir le disque de frein 35.

Sur la figure 20, la garniture 38 est assujettie mécaniquement au support garniture 37 par l'intermédiaire d'une zone de fixation (non représentée) sensiblement en forme de queue d'aronde. Une telle zone de fixation n'a rien à voir avec les zones d'appui et de retrait décrite plus haut puisqu'elle ne permet pas de répartir la transmission des efforts sur l'organe de freinage.

La figure 22 illustre un exemple de réalisation de la biellette de transmission d'efforts 50.

La biellette de transmission d'efforts 50 présente une forme sensiblement en L, ou en S, avec les liaisons pivots 70, 75 respectivement au support 49 du véhicule et au support garnitures 37.

La biellette de transmission d'efforts 50 s'étend sensiblement dans un même plan que celui dans lequel s'étend ledit levier 40.

Un tel agencement est particulièrement compact et permet un débattement maximum du support garnitures 37 par rapport au support 49, grâce à la biellette de transmission d'efforts 50 en L ou en S qui ne gêne par le mouvement du support garnitures 37.

Dans une variante non illustrée, la biellette de transmission d'efforts peut présenter une zone d'appui formée en escalier. Autrement dit, la zone d'appui peut comporter différentes portions d'appui plus ou moins décalées par rapport à la zone de retrait adjacente. En particulier, la portion d'appui peut former une zone dite de sur-appui.

Dans d'autres variantes non illustrées, le support-garnitures peut comporter une ou plusieurs zones de retrait s'étendant sur environ 100 mm à environ 300 mm depuis l'axe central transversal dudit dispositif.

La ou les zones de retrait peuvent être formées par des cavités ayant une profondeur comprise par exemple entre environ 0,1 mm et environ 0,5 mm.

Selon un premier exemple de réalisation, le support-garnitures peut comporter une unique zone de retrait s'étendant sur environ 180 mm (ou sur 90 mm de part et d'autre de l'axe transversal), et ayant une cavité d'environ 0,2 mm ; le reste du support-garnitures formant globalement une ou plusieurs zones d'appui.

Selon un deuxième exemple de réalisation, le support-garnitures peut comporter une première zone de retrait s'étendant sur environ 120 mm (ou sur 60 mm de part et d'autre de l'axe transversal), et ayant une cavité d'environ 0,3 mm, puis des deuxièmes zones de retrait succédant immédiatement ou non à la première zone de retrait, s'étendant chacune sur environ 60 mm et ayant une cavité d'environ 0,15 mm ; le reste du support-garnitures formant globalement une ou plusieurs zones d'appui.

Selon un troisième exemple de réalisation, le support-garnitures peut comporter une première zone de retrait s'étendant sur environ 120 mm (ou sur 60 mm de part et d'autre de l'axe transversal), et ayant une cavité d'environ 0,35 mm, puis des deuxièmes zones de retrait succédant immédiatement ou non à la première zone de retrait, s'étendant chacune sur environ 60 mm et ayant une cavité d'environ 0,2 mm ; le reste du support-garnitures formant globalement une ou plusieurs zones d'appui.

De tels agencements des zones de retrait permettent de répartir la transmission des efforts sur l'organe de freinage.

D'autres variantes non illustrées sont décrites ci-dessous.

Les zones d'appuis et/ou les zone de retrait peuvent être ménagées dans les garnitures plutôt que dans les supports garnitures.

Certaines zones d'appui et/ou de retrait peuvent s'étendre totalement le long de l'orientation générale transversale, tandis que d'autres de ces zones peuvent s'étendre seulement partiellement.

Les zones d'appui et de retrait ne sont pas ménagées sensiblement symétriquement par rapport à l'axe central transversal.

Une unique garniture, plutôt que deux garnitures, est montée sur chacun des supports garnitures ou, au contraire, plus de deux garnitures sont montées sur chacun des supports garnitures.

La biellette de transmission d'efforts peut assujettie mécaniquement au support du véhicule, directement ou bien par une pièce de liaison intermédiaire.

Le système de freinage ferroviaire peut être différent de celui décrit ci-dessus en ce qu'il peut s'agir seulement d'un frein de service, ou bien d'un frein de parking, et que le mécanisme peut être à ressorts comme celui décrit par exemple dans le document EP 2 154 040.

Plus généralement, l'invention ne se limite pas aux exemples décrits et représentés.

## Revendications

1. Système de freinage ferroviaire pour véhicule, comportant une timonerie de freinage (4) et un frein de service et/ou de parking (6, 7) configuré pour agir sur au moins un organe de freinage (35) dudit véhicule ferroviaire par l'intermédiaire de ladite timonerie de freinage, laquelle est pourvue d'au moins un dispositif (5) ayant au moins un support garnitures (37) et au moins une garniture (38) assujettie mécaniquement sur ledit au moins un support garnitures, et d'au moins un levier (40) s'étendant depuis ledit frein de service et/ou de parking jusqu'audit dispositif, **caractérisé en ce que** ledit au moins un levier est assujetti mécaniquement audit au moins un support garnitures, sur une zone d'attache (39) de ce dernier qui est opposée à ladite au moins une garniture et qui se trouve au plus à 35 mm d'un axe central transversal (51) dudit dispositif.

2. Système de freinage ferroviaire selon la revendication 1, **caractérisé en ce que** ladite zone d'attache (39) se trouve entre environ 0 et 35 mm dudit axe central transversal (51) dudit dispositif (5).

3. Système de freinage ferroviaire selon l'une des revendications 1 et 2, **caractérisé en ce que** ladite zone d'attache (39) s'étend selon une orientation générale longitudinale dudit dispositif (5) et sur une longueur comprise entre environ 15 mm et environ 70 mm.

4. Système de freinage ferroviaire selon l'une quelconque des revendications 1 à 3, **caractérisé en ce que** ladite zone d'attache (39) s'étend de part et d'autre dudit axe central transversal (51) dudit dispositif (5) de manière ininterrompue.

5. Système de freinage ferroviaire selon l'une quelconque des revendications 1 à 3, **caractérisé en ce que** ladite au moins une zone d'attache (39) s'étend de part et d'autre dudit axe central transversal (51) dudit dispositif (5) de manière interrompue.

6. Système de freinage ferroviaire selon l'une quelconque des revendications 1 à 5, **caractérisé en ce qu'**il comporte au moins une biellette de transmission d'efforts (50) assujettie mécaniquement à une première extrémité à un support (49) du véhicule et à une seconde extrémité opposée à ladite première extrémité audit au moins un support garnitures (37), à proximité immédiate de ladite zone d'attache (39) dudit au moins un levier (40).

7. Système de freinage ferroviaire selon la revendication 6, **caractérisé en ce que** ladite au moins une biellette de transmission d'efforts (50) présente une forme sensiblement en L, ou en S.

8. Système de freinage ferroviaire selon la revendication 7, **caractérisé en ce que** ladite au moins une biellette de transmission d'efforts (50) s'étend sensiblement dans un même plan que celui dans lequel s'étend ledit au moins un levier (40).

9. Système de freinage ferroviaire selon l'une quelconque des revendications 6 à 8, **caractérisé en ce que** ladite au moins une biellette de transmission d'efforts (50) est assujettie mécaniquement par des liaisons pivots (70, 75) respectivement audit support du véhicule et audit au moins un support garnitures.

10. Système de freinage ferroviaire selon l'une quelconque des revendications 6 à 9, **caractérisé en ce que** ladite au moins une biellette de transmission d'efforts (50) présente un jeu ajouté fonctionnel au niveau de sa seconde extrémité où elle est liée audit au moins un support garnitures (37).

11. Système de freinage ferroviaire selon la revendication 10, **caractérisé en ce que** ladite au moins une biellette de transmission d'efforts (50) est liée via une rotule audit au moins un support garnitures (37).

12. Système de freinage ferroviaire selon la revendication 10, **caractérisé en ce que** ladite au moins une biellette de transmission d'efforts (50) est liée audit au moins un support garnitures (37) via un axe pivotant dans un orifice de diamètre bien plus grand que celui dudit axe pivotant, ou dans un orifice oblong.

13. Système de freinage ferroviaire selon l'une quelconque des revendications 1 à 12, **caractérisé en ce que** ledit dispositif (5) comporte au moins deux zones d'appui (60) sur ledit au moins un organe de freinage (35) et au moins une zone de retrait (61) située entre les deux dites zones d'appui.

14. Système de freinage ferroviaire selon la revendication 13, **caractérisé en ce que** ledit au moins un support garnitures (37) et/ou ladite au moins une garniture (38) présentent une orientation générale longitudinale et une orientation générale transversale, avec lesdites zones d'appui (60) et de retrait (61) qui se succèdent selon ladite orientation générale longitudinale.

15. Véhicule ferroviaire comportant au moins un organe de freinage (35), notamment un disque de frein, et au moins un système de freinage ferroviaire (1) selon l'une quelconque des revendications 1 à 14, qui est configuré pour agir sur ledit au moins un organe de freinage.

## Patentansprüche

1. Eisenbahnbremssystem für Fahrzeuge, umfassend ein Bremsgestänge (4) und eine Betriebs- und/oder Feststellbremse (6, 7), die dazu konfiguriert ist, auf mindestens ein Bremselement (35) des Eisenbahnfahrzeugs über das Bremsgestänge zu wirken, welches mindestens mit einer Vorrichtung (5) ausgestattet ist, die mindestens einen Bremsbelagträger (37) und mindestens einen Bremsbelag (38), der mechanisch auf dem Bremsbelagträger befestigt ist, und mindestens einen Hebel (40) aufweist, der sich von der Betriebs- und/oder Feststellbremse bis zur Vorrichtung erstreckt, **dadurch gekennzeichnet, dass** der mindestens eine Hebel mechanisch an dem mindestens einen Bremsbelagträger in einem Befestigungsbereich (39) des letzteren befestigt ist, der dem mindestens einen Bremsbelag gegenüberliegt und der sich nicht mehr als 35 mm von einer mittleren Querachse (51) der Vorrichtung entfernt befindet.

2. Eisenbahnbremssystem nach Anspruch 1, **dadurch gekennzeichnet, dass** der Befestigungsbereich (39) sich zwischen etwa 0 und 35 mm von der mittleren Querachse (51) der Vorrichtung (5) entfernt befindet.

3. Eisenbahnbremssystem nach einem der Ansprüche 1 und 2, **dadurch gekennzeichnet, dass** sich der Befestigungsbereich (39) in einer allgemeinen Längsausrichtung der Vorrichtung (5) und über eine Länge zwischen etwa 15 mm und etwa 70 mm erstreckt.

4. Eisenbahnbremssystem nach einem der Ansprüche 1 bis 3, **dadurch gekennzeichnet, dass** sich der Befestigungsbereich (39) ununterbrochen auf beiden Seiten der mittleren Querachse (51) der Vorrichtung (5) erstreckt.

5. Eisenbahnbremssystem nach einem der Ansprüche 1 bis 3, **dadurch gekennzeichnet, dass** sich der mindestens eine Befestigungsbereich (39) unterbrochen auf beiden Seiten der mittleren Querachse (51) der Vorrichtung (5) erstreckt.

6. Eisenbahnbremssystem nach einem der Ansprüche 1 bis 5, **dadurch gekennzeichnet, dass** es mindestens eine Kraftübertragungsverbindungsstange (50) umfasst, die an einem ersten Ende mechanisch an einem Träger (49) des Fahrzeugs und an einem dem ersten Ende gegenüberliegenden zweiten Ende an dem mindestens einen Bremsbelagträger (37) in unmittelbarer Nähe des Befestigungsbereichs (39) des mindestens einen Hebels (40) befestigt ist.

7. Eisenbahnbremssystem nach Anspruch 6, **dadurch gekennzeichnet, dass** die mindestens eine Kraftübertragungsverbindungsstange (50) im Wesentlichen L-förmig oder S-förmig ist.

8. Eisenbahnbremssystem nach Anspruch 7, **dadurch gekennzeichnet, dass** sich die mindestens eine Kraftübertragungsverbindungsstange (50) im Wesentlichen in derselben Ebene erstreckt wie die, in der sich der mindestens eine Hebel (40) erstreckt.

9. Eisenbahnbremssystem nach einem der Ansprüche 6 bis 8, **dadurch gekennzeichnet, dass** die mindestens eine Kraftübertragungsverbindungsstange (50) durch Schwenkverbindungen (70, 75) jeweils mechanisch am Fahrzeugträger und am mindestens einen Bremsbelagträger befestigt ist.

10. Eisenbahnbremssystem nach einem der Ansprüche 6 bis 9, **dadurch gekennzeichnet, dass** die mindestens eine Kraftübertragungsverbindungsstange (50) auf Höhe ihres zweiten Endes, an dem sie mit dem mindestens einen Bremsbelagträger (37) verbunden ist, ein zusätzliches funktionales Spiel aufweist.

11. Eisenbahnbremssystem nach Anspruch 10, **dadurch gekennzeichnet, dass** die mindestens eine Kraftübertragungsverbindungsstange (50) über ein Gelenk mit dem mindestens einen Bremsbelagträger (37) verbunden ist.

12. Eisenbahnbremssystem nach Anspruch 10, **dadurch gekennzeichnet, dass** die mindestens eine Kraftübertragungsverbindungsstange (50) mit dem mindestens einen Bremsbelagträger (37) über eine Schwenkachse in einer Öffnung, deren Durchmesser weitaus größer ist als der der Schwenkachse, oder in einer länglichen Öffnung verbunden ist.

13. Eisenbahnbremssystem nach einem der Ansprüche 1 bis 12, **dadurch gekennzeichnet, dass** die Vorrichtung (5) mindestens zwei Auflagebereiche (60) auf dem mindestens einen Bremselement (35) und mindestens einen Rückzugsbereich (61), der sich zwischen den Auflagebereichen befindet, umfasst.

14. Eisenbahnbremssystem nach Anspruch 13, **dadurch gekennzeichnet, dass** der mindestens eine Bremsbelagträger (37) und/oder der mindestens eine Bremsbelag (38) eine allgemeine Längsausrichtung und eine allgemeine Querausrichtung aufweisen, wobei die Auflage- (60) und Rückzugsbereiche (61) in der allgemeinen Längsausrichtung aufeinander folgen.

15. Eisenbahnfahrzeug, umfassend mindestens ein Bremselement (35), insbesondere eine Bremsscheibe, und mindestens ein Eisenbahnbremssystem (1) nach einem der Ansprüche 1 bis 14, das dazu konfiguriert ist, auf das mindestens eine Bremselement zu wirken.

## Claims

1. Rail vehicle braking system, comprising a braking linkage (4) and a service brake and/or parking brake (6, 7) configured to act on at least one braking member (35) of said rail vehicle via said braking linkage, which linkage is provided with at least one device (5) having at least one lining mounting (37) and at least one lining (38) mechanically connected to said at least one lining mounting, and with at least one lever (40) extending from said service brake and/or parking brake to said device, **characterized in that** said at least one lever is mechanically connected to said at least one lining mounting, on an attachment region (39) thereof which is located away from said at least one lining and which is at most 35 mm from a transverse central axis (51) of said device.

2. Rail vehicle braking system according to claim 1, **characterized in that** said attachment region (39) is located between approximately 0 and 35 mm from said transverse central axis (51) of said device (5).

3. Rail vehicle braking system according to one of claims 1 and 2, **characterized in that** said attachment region (39) extends in a longitudinal general orientation of said device (5) and over a length comprised between approximately 15 mm and approximately 70 mm.

4. Rail vehicle braking system according to any one of claims 1 to 3, **characterized in that** said attachment region (39) extends uninterruptedly on opposite sides of said transverse central axis (51) of said device (5).

5. Rail vehicle braking system according to any one of claims 1 to 3, **characterized in that** said at least one attachment region (39) extends uninterruptedly on opposite sides of said transverse central axis (51) of said device (5).

6. Rail vehicle braking system according to any one of claims 1 to 5, **characterized in that** it comprises at least one force transmission link member (50) mechanically connected at a first end to a mounting (49) of the vehicle and at a second end, which is an opposite end to said first end, to said at least one lining mounting (37), in immediate proximity to said attachment region (39) of said at least one lever (40).

7. Rail vehicle braking system according to claim 6, **characterized in that** said at least one force transmission link member (50) is substantially L-shaped, or S-shaped.

8. Rail vehicle braking system according to claim 7, **characterized in that** said at least one force transmission link member (50) extends substantially in a same plane as that in which said at least one lever (40) extends.

9. Rail vehicle braking system according to any one of claims 6 to 8, **characterized in that** said at least one force transmission link member (50) is mechanically connected by pivotal connections (70, 75) respectively to said vehicle mounting and to said at least one lining mounting.

10. Rail vehicle braking system according to any one of claims 6 to 9, **characterized in that** said at least one force transmission link member (50) has an added functional clearance at its second end where it is connected to said at least one lining mounting (37).

11. Rail vehicle braking system according to claim 10, **characterized in that** said at least one force transmission link member (50) is connected via a rotary joint to said at least one lining mounting (37).

12. Rail vehicle braking system according to claim 10, **characterized in that** said at least one force transmission link member (50) is connected to said at least one lining mounting (37) via a pivotal shaft pivoting in an aperture of considerably greater diameter than that of said pivotal shaft, or in an oblong aperture.

13. Rail vehicle braking system according to any one of claims 1 to 12, **characterized in that** said device (5) comprises at least two bearing regions (60) for bearing on said at least one braking member (35) and at least one set back region (61) located between the two said bearing regions

14. Rail vehicle braking system according to claim 13, **characterized in that** said at least one lining mounting (37) and/or said at least one lining (38) have a longitudinal general orientation and a transverse general orientation, with said bearing (60) and set back (61) regions succeeding each other in said longitudinal general orientation.

15. Rail vehicle comprising at least one braking member (35), for example in particular a brake disk, and at least one rail vehicle braking system (1) according to any one of claims 1 to 14, which is configured to act on said at least one braking member.
